# EUROPÄISCHE PATENTANMELDUNG

(11) **EP 3 017 786 A1**
(43) Veröffentlichungstag der Anmeldung: **11.05.2016**
(21) Anmeldenummer: 14191615.5
(22) Anmeldetag: 04.11.2014
(51) Int. Cl.: A61C 13/00, A61C 13/083, A61C 13/09, A61C 13/275

(54) **Ein- oder mehrgliedrige Dentalrestauration, sowie Verfahren zu deren Herstellung**

(71) Anmelder: Ivoclar Vivadent AG, 9494 Schaan (LI)
(72) Erfinder: Cavegn, Nadja, 9498 Planken (LI); Jussel, Rudolf, 6805 Feldkirch-Gisingen (AT); Ebert, Jörg, 9470 Buchs (CH)
(74) Vertreter: Baronetzky, Klaus

(57) **Zusammenfassung**

Die Erfindung betrifft eine ein- oder mehrgliedrige Dentalrestauration, die aus einer Stützstruktur (12) und einer Verblendung (40) besteht, welche Stützstruktur (12) insbesondere aus einer Oxidkeramik generativ, besonders bevorzugt per Rapid Prototyping, hergestellt ist, wobei die Verblendung (40) durch Pressen aus einer gegenüber der Stützstruktur (12) transluzenteren Keramik, wie einer Glaskeramik oder einem Komposit, hergestellt ist, dadurch gekennzeichnet, dass die Verblendung (12) Ausnehmungen (42) der als Netz- oder Tragwerkstruktur oder als Armierung ausgebildeten Stützstruktur (12) ausfüllt und / oder durchdringt, wobei es insbesondere vorgesehen ist, dass die Ausnehmungen (42) die Stützstruktur (12) durchdringen.

## Beschreibung

Die Erfindung betrifft eine ein- oder mehrgliedrige Dentalrestauration, gemäß Anspruch 1, sowie ein Verfahren zu deren Herstellung, gemäß Anspruch 18.

Es ist seit langem bekannt, dass Dentalrestaurationen günstigerweise aus mehreren Schichten aufgebaut werden können, wobei die innenliegende Schicht meist farbintensiver und opaker gehalten ist und die äußere Schicht zur optischen Annäherung an natürliche Zähne einen transluzenten Aufbau hat.

Die innenliegende Schicht dient hierbei zugleich der mechanischen Stabilisierung der Dentalrestauration, die, gerade auch bei Brücken, die teilweise erheblichen anfallenden Kaukräfte aufnehmen muss.

Ein Beispiel für eine frühe Lösung einer derartigen Dentalbrücke aus einer Metallbasis und einem Keramik- oder Kunststoffüberzug ist aus der EP 94 615 A1 zu entnehmen.

In den Folgejahren wurde die Mehrschichttechnik immer weiter optimiert. So zeigt die EP 781 530 A2 der vorliegenden Anmelderin bereits ein keramisches - anstelle eines metallischen - Verstärkungselement als Armierung. Dieses kann wahlweise auch mit einem Geschiebe zur Kompensation von Längenabweichungen der Brücke versehen sein und erlaubt die Verblendung mit einer keramischen Masse.

Während Lösungen, bei denen die Armierung oder das Verstärkungselement aus Metall oder Keramik und die Verblendung aus Kunststoff besteht, gerne verwendet werden, gelten Brücken mit keramischen Verstärkungselementen - die gegebenenfalls noch ein Geschiebe aufweisen - und einer Keramikverblendung als vergleichsweise schwierig zu fertigen. Typischerweise wird zunächst das Verstärkungselement gefertigt, und hieran anschließend wird die Verblendung unter genauer Beachtung der erwünschten Außenformen erzeugt.

Nachdem die Erzeugung gleichsam der Differenzform nicht unkritisch ist und Schwankungen und Toleranzüberschreitungen nicht auszuschließen sind, ist auch der umgekehrte Weg vorgeschlagen worden, nämlich, dass eine Außenform, eine sogenannte Prefacette, vorgefertigt erzeugt wird und dann die Innenform hieran anschließend bereitgestellt wird.

Diese Lösung ist zwar bei Kronen und Verblendungen möglich, bietet jedoch weitere Schwierigkeiten, wenn es um die Erzeugung von dentalen Brücken geht.

Demgegenüber liegt der Erfindung die Aufgabe zugrunde, eine ein- oder mehrgliedrige Dentalrestauration gemäß dem Oberbegriff in Anspruch 1 zu schaffen, sowie ein entsprechendes Verfahren zur Herstellung dieser gemäß dem Oberbegriff in Anspruch 18, die hinsichtlich der Herstellbarkeit, der mechanischen Festigkeit und aber auch der Ästhetik, verbessert ist.

Diese Aufgabe wird erfindungsgemäß durch Anspruch 1 gelöst. Vorteilhafte Weiterbildungen ergeben sich aus den Unteransprüchen.

Erfindungsgemäß wird anstelle des gattungsgemäßen Standes der Technik mit dem Verstärkungselement eine besondere Struktur bereit gestellt, die überraschend die Probleme des Standes der Technik löst: Es handelt sich um eine Netz- oder Tragwerksstruktur mit Ausnehmungen in dieser, und feingliedrigen Streben, die sich mehrfach verästelt quer zueinander erstrecken und zwischen sich die Ausnehmungen schaffen.

Durch die erfindungsgemäße feingliedrige Stützstruktur, die eine großflächige Verbindung mit der Verblendung eingeht, ergibt sich überraschend ein deutlich verbessertes Festigkeits- zu Volumenverhältnis, das jedenfalls deutlich besser als die Summe der Festigkeiten der einzelnen Bestandteile ist. Die erfindungsgemäße Struktur erstreckt sich bei der Realisierung von Brücken zwischen den zu überbrückenden Pfeilerzähnen.

In vorteilhaften Weiterbildung ist es vorgesehen, dass das Brückenzwischenglied oder die Brückenzwischenglieder in der Stützstruktur aus labialer bzw. bukkaler Sicht als scheibenförmige Vergrößerungen der interdentalen Verbinder ausgebildet sind und im Bereich dieser Vergrößerungen die Ausnehmungen realisiert sind, die sich insbesondere auch in zervikaler Richtung und/oder lingualer Richtung offen erstrecken. Hierdurch ergibt sich eine Netzwerkstruktur, und die Belastbarkeit der Dentalrestauration im Verhältnis zum Materialeinsatz ist noch weiter verbessert.

Besonders günstig ist es ferner, wenn die Verblendung aus einem Positivmodell erzeugt ist, das in eine Muffel eingebettet, welches Positivmodell in einem thermischen Prozess vollständig ausgebrannt wird. Der entstandene Hohlraum wird anschliessend durch Pressen oder Giessen ausgefüllt.

Die Stützstruktur wird unter Berücksichtigung der physiologischen Kaubelastungen konstruiert und ist insbesondere bis auf ein Mindestmaß des erforderlichen Materialbedarfs reduziert. Hierzu wird in erfindungsgemäß bevorzugter Ausgestaltung die genaue Anordnung der Tragwerks- oder Netzstruktur per CAD, insbesondere nach der Finite-Elemente-Methode, berechnet und festgelegt. Die erfindungsgemäße feingliedrige Tragwerkstruktur kann auch teilweise mindestens eine Baumstruktur und/oder eine Wabenstruktur aufweisen.

Erfindungsgemäß besonders günstig ist es auch, dass eine lastabhängige Verstärkung ohne weiteres möglich ist, so dass die Stützstruktur gezielt an besonders belastenden Stellen nach bionischen Gesichtspunkten eine intensiver gegliederte und stärker ausgebaute Tragwerkstruktur vorgesehen wird.

Aufgrund ihrer feingliedrigen Verästelung ist es erforderlich, die Stützstruktur in einem generativen Verfahren zu fertigen. Hierbei hat sich insbesondere Sterolithographie als geeignet herausgestellt; die Fertigungsgenauigkeit kann hier bei beispielsweise 50 µm liegen. Hierbei werden besonders bevorzugt keramisch gefüllte und photopolymerisierbare Schlicker verwendet. Die so hergestellten Bauteile werden in einem thermischen Postprocessing entbindert und dichtgesintert. Die so entstandene keramische Stützstruktur mit netzförmigen oder tragwerkförmigen Hohlräumen wird abschliessend mit einer glaskeramischen Presskeramik gefüllt.

Wenn die keramische Stützstruktur in einem generativen Prozeß aufgebaut wird, sollte der Schlicker mit Füllstoffen gefüllt sein. Diese Füllstoffe können oxid- oder glaskeramische Partikel mit einer Korngröße bis zu 50 µm sein.

Alternativ kann die Stützstruktur - z.B. generativ hergestellt - als eigenes Positivmodell eingebettet werden, wobei dann nach Abbinden der Einbettmasse diese rückstandsfrei ausgebrannt wird. Der so entstandene Hohlraum wird dann entweder in Metall im Gussverfahren oder mit Glaskeramik im Pressverfahren gefüllt, und in dieser Weise wird so die Stützstruktur ausgebildet. Bei dieser Alternative wird ungefülltes Material für das Positivmodell der Stützstruktur verwendet.

Bei der Konstruktion der tragwerkartigen Stützstruktur versteht es sich, dass die Kraftverteilung durch die Anpassung der Struktur an die Hauptbeanspruchungsrichtungen erfindungsgemäß optimiert wird. Keramik ist bekanntlich signifikant druckfester als zugfester, was bei der Realisierung der Stützstruktur von der Auslegung dieser her berücksichtigt wird. Die zu erwartenden Maximalspannungen fließen in die Berechnung der Stützstruktur grundsätzlich ein, jedoch ist diese so ausgelegt, das sie lediglich in Kombination mit der Verblendung oder Hüllkeramik und bei Einbettung in diese die bestehenden Maximalspannungen mit der vorgesehenen Sicherheitsmarge auffängt. Unterkritische Bereiche werden bewusst mit zusätzlichen Aussparungen versehen, was die Masse der Oxidkeramik reduziert.

Ein weiterer Vorteil der erfindungsgemäßen Realisierung einer feingliedrigen Netzstruktur als Stützstruktur ist die erleichterte und schnellere Entbinderung, nachdem lediglich geringere Volumina der Stützstruktur bestehen. So kann die Stützstruktur innerhalb von 3 bis 4 Stunden entbindert und in 1 bis 2 Stunden gesintert werden.

Erfindungsgemäß wird diese Struktur so eingesetzt, dass sie das Keramikmaterial der Verblendung durchdringt, also, in die dortigen Ausnehmungen eindringt, welche Struktur sich jedoch nicht bis zur Oberfläche erstreckt, sondern beispielsweise einen Abstand von 1,5 oder 2 mm zur Oberfläche der Restauration einhält. Durch die intensive Durchdringung zwischen der strukturierten Stützkeramik und der Verblendung entsteht nicht nur eine gute Verbindung zwischen diesen, nachdem die Verbindungsoberfläche, also die gesamte Oberfläche, an welcher die Stützstruktur und die Verblendung aneinander anliegen, gegenüber dem Stand der Technik deutlich vergrößert ist, beispielsweise auch das Dreifache oder gar bis auf das Zehnfache:

Nachdem die Grenzflächen sich nicht stets nach radial außen, sondern in zahlreiche verschiedenen Richtungen erstrecken, ist die Gefahr, dass die Keramiken sich aufgrund unterschiedlicher Wärmeausdehnungskoeffizienten voneinander ablösen, gravierend geringer: Die gegenüber der Stützstuktur eine geringere Bruchfestigkeit aufweisende Verblendkeramik verbleibt sicher in Verbindungsanlage mit der Tragstrukturkeramik, nachdem die Keramiken sich in alle Raumrichtungen aneinander abstützen und miteinander verbunden sind.

Die Aussparungen oder Hohlräume in der Netz- oder Tragwerksstruktur der Stützkeramik sind mit der Verblendkeramik gefüllt und stützen diese auch gleichzeitig ab, so dass es überraschend unkritisch ist, wenn die mechanische Festigkeit der Stützkeramik alleine - also ohne Aufbringung der Verblendkeramik - an sich nicht ausreichend für die in der Praxis aufzunehmende Belastung ist.

Demgegenüber ist es vielmehr erfindungsgemäß vorgesehen, dass Festigkeit auch der Stützkeramik beim Brennen zusammen mit der Verblendkeramik die erwünschte Endfestigkeit ergibt.

Überraschend ergibt sich mit dieser Maßnahme auch die Möglichkeit, die Masse der Stützkeramik deutlich zu reduzieren, was der Ästhetik der gesamten Dentalrestauration zu Gute kommt. Die Neigung der Stützstruktur, durch die Verblendkeramik hindurch zu scheinen, ist erfindungsgemäß praktisch eliminiert, so dass die Verwendung von Opaker oder dergleichen jedenfalls entbehrlich ist.

In vorteilhafter Ausgestaltung wird die Stützstruktur per RPT hergestellt. Insbesondere, wenn die Stereolithographie-Technik verwendet wird, lassen sich auch sehr feingliedrige Strukturen fertigen; bevorzugt aus Schlicker, der eingebindert und dichtgesintert wird. Auch andere RPT-Techniken sind möglich.

Die so entstehenden netzförmigen oder tragwerkförmigen Hohlräume werden in an sich bekannter Weise mit einer Presskeramik gefüllt, wobei eine Glaskeramik bevorzugt ist. Es können Lithiumdisilikat-, Misch- oder Feldspatkeramiken hier eingesetzt werden, oder beliebige andere pressgeeignete Werkstoffe.

Nach Fertigstellung der Gerüstkeramik wird diese als Basis für die Formgebung der Außenform der Dentalrestauration verwendet. Die Dentalrestauration wird in der gewünschten Weise in Kunststoff oder Wachs modelliert. Das Anstiften, also die Bereitstellung eines Zubringerkanals zum Presshohlraum, erfolgt bevorzugt in den massiveren Bereichen der Dentalrestauration, ggf. schräg seitlich außerhalb des Bereichs der Stützstruktur, so dass diese möglichst geringe Einströmwiderstände beim späteren Einströmen der erweichten Presskeramik für die Verblendung bildet.

Bevorzugt ist die Strömungsrichtung so gewählt, dass sie sich entlang der Haupterstreckungsrichtung der Streben der Netzwerkstruktur richtet, so dass diese einen möglichst geringen Strömungswiderstand bilden.

Nach dem Einbetten der fertig modellierten Außenform der Dentalstruktur und Aushärten der Einbettmasse wird der der Verblendung entsprechende Kunststoff- oder Wachsmasse ausgebrannt, und es wird mit einer geringen Strömungsgeschwindigkeit die Verblendkeramik in den verbleibenden Formhohlraum eingepresst.

Überraschend ergibt sich erfindungsgemäß eine höhere Genauigkeit der Außenform nach dem üblichen Abkühlen, im Vergleich mit einem massiven Verstärkungselement.

Um die Stützstruktur in der Muffel beim Durchpressen fixieren zu können, sind bevorzugt zusätzlich Fixierstege vorgesehen, die im nicht sichtbaren Bereich der Restaurationen vorgesehen sind und nach dem Durchpressen mit der Verblendkeramik entfernt werden.

In weiterer vorteilhafter Ausgestaltung ist es auch möglich, eines oder mehrere vorgefertigte Standardbauteile zu verwenden, das von den Abmessungen her für die Bereitstellung der erwünschten Brücke geeignet ist. Auch dieses lässt sich mit der Verblendkeramikmasse gleichsam durchpressen, so dass Verblendkeramik in sämtliche Hohlräume und Aussparungen der Stützkeramik eindringt.

Die Verblendung besteht aus einer Glaskeramik. Neben Feldspatkeramiken ist eine Lithiumdisilikatkeramik besonders geeignet. Es ist aber auch möglich, hierfür ein Komposit zu verwenden oder einen beliebigen, hierfür geeigneten,

Die Verblendung gibt die Außenkontur der Dentalrestauration vor. Sie durchdringt die Ausnehmungen in der Stützstruktur. Neben der Verbesserung der Ästhetik durch die transluzente Verblendung hat die Verblendung auch eine festigkeitssteigende Funktion; die Kontaktoberfläche zur Stützstruktur ist durch deren Feingliedrigkeit wesentlich erhöht.

In weiterer vorteilhafter Ausgestaltung ist es vorgesehen, dass der Hohlraum für die Verblendung in einem Pressverfahren mit einer Glaskeramik ausgefüllt wird, wobei das Material für die Stützstruktur eine höhere Festigkeit als das Material für die Verblendung aufweist, und wobei die Verblendung durch Pressen aus einer gegenüber der Glaskeramik der Stützstruktur transluzenteren Glaskeramik, oder einem Komposit, hergestellt ist.

Die Stützstruktur besteht bevorzugt aus einem oxidkeramischen Material wie Zirkondioxid. Sie wird generativ hergestellt, beispielsweise per Rapid Prototyping. Es ist aber auch möglich, bereits vorgefertigte, einzelne oder zusammengesetzte Elemente der Stützstruktur zu verwenden und in diese einzubauen.

Anstelle der Realisierung einer Stützstruktur aus oxidkeramischen Material ist es auch möglich, ein fein strukturertesFeingerüst zu verwenden, das zum Beispiel über Gußtechnik hergestellt ist und mit einem Opaker in an sich bekannter Weise verblendet wird.

Bevorzugt wird das Positivmodell der Verblendung aufbauend auf der fertigen Stützstruktur generativ aufgebaut, beispielsweise aus einem ausbrennbaren Kunststoff. Dieser Kunststoff durchdringt die Ausnehmungen in der bereits fertigen Stützstruktur und umhüllt diese, wobei die Außenkontur der tatsächlich später zu realisierenden Außenkontur entspricht.

Die in dem generativen Fertigungsverfahren, beispielsweise per Rapid Prototyping, hergestellte und die Ausnehmung in der Stützstruktur durchdringende und die Stützstrukur umgebende Verblendung, die derzeit noch in Kunststoffform als Positivmodell vorliegt, wird dann angestiftet, soweit dies erforderlich ist, also mit einem Presskanal versehen, der sich zum Muffeldorn hin erstreckt und dann in einer hoch temperaturfesten Einbettmasse eingebettet wird.

Diese Kunststoffform wird nach Abbinden der Einbettmasse in an sich bekannter Weise vollständig ausgebrannt, und im abschließenden Schritt wird in einem Heißpressverfahren der sich so ergebende Hohlraum zwischen der ausgehärteten Einbettmasse und der Stützstruktur mittels des für die Verblendung verwendeten Materials verpresst.

Bei der Festlegung der Außenform der Stützstruktur und damit auch der Verblendung wird per CAD berücksichtigt, dass ästhetische Gesichtspunkte besonders relevant sind. Wenn beispielsweise die Stützstruktur sich aus Gründen der optimierten Festigkeit relativ nah an äußeren und damit sichtbaren Bereichen der Verblendung erstreckt, ist es auch möglich, mindestens dort vergleichsweise transluzentes Material für die Stützstruktur zu verwenden, oder beispielsweise bei Realisierung der Stützstruktur aus Metall einen Opaker zu verwenden.

Die Dentalrestauration weist an den Pfeilerzähnen in an sich bekannter Weise Käppchen auf, die Schürzen bilden, die sich an der labial/bukkalen Seite einerseits und der lingualen Seite andererseits in zervikaler Richtung erstrecken und ausgerundet auslaufen. Die Längserstreckung der Schürzen ist dergestalt geneigt, dass die Schürzenachse in zervikaler Richtung von der Brücke weg weist und in inzisal/okklusaler Richtung auf die Brücke zuweist.

Die Achsenneigung der Schürzen beträgt, zwischen 8 ° und 30 °, insbesondere zwischen 10 ° und 25 ° gegenüber einer Senkrechten zur Okklusionsebene.

Bevorzugt ist es vorgesehen, dass die Stützkeramik basierend auf der berechneten Kraftverteilung der Brücke unter möglichst weitgehender Reduktion der verwendeten Massen hergestellt ist, wobei insbesondere die einzelnen Streben der Stützkeramik ein Längen/Dicken-Verhältnis von mehr als 3 zu 1, insbesondere mehr als 5 zu 1 aufweisen.

Bevorzugt wird mit einer CAD-Software per CAD-Designs die Form für die Stützkeramik erzeugt, welche automatisch mindestens einen Anstiftkanal für die Stützkeramik bereitstellt, der sich in einem Winkel zwischen 45 ° und 60 ° zur Okklusionsebene erstreckt und in an sich bekannter Weise dem dicksten Bereich der Stützkeramik (12) benachbart endet.

Erfindungsgemäß ist es besonders günstig, dass die Tragwerkstruktur nach bionischen Gesichtspunkten realisiert werden kann und überraschend auch Probleme hinsichtlich der Schwindung beseitigt werden können. Die so erzeugten Strukturen sind komplex und erlauben eine bessere Formtreue.

In weiterer bevorzugter Ausgestaltung sind kurzerhand Oxidkeramikfäden oder -stäbe nach der Art von glasfaserverstärktem Kunststoff vorgesehen, die sich schräg und quer und insbesondere auch gebogen durch die Brückenstruktur hindurch erstrecken. Ermittlungen ergaben, dass sich die Stabilität und Widerstandsfähigkeit der Brücke hierdurch deutlich verbessern lassen.

Durch die erfindungsgemäße feingliedrige Anordnung ist der unterschiedliche Wärmeausdehnungskoeffizient zwischen Zirkondioxid und Lithiumdisilikat (10,5 gegen 9,5 bis 9,8/µK°) unkritisch, und auch ohne besondere Maßnahmen ist die Haftung sicher gewährleistet.

In vorteilhafter Ausgestaltung ist auch die Form der Aussparungen bei der Realisierung des Designs der Stützstruktur ein Parameter, der optimierbar ist. Die Form der Aussparung hängt selbstverständlich mit der Form der Streben der Tragwerkstruktur zusammen. Bevorzugt erstrecken sich diese ebenfalls längsoval in Richtung der Haupt-Kraftrichtung, und zwar mit einem geringen Längen/Breiten-Verhältnis zwischen 1 zu 1 und 10 zu 1, bevorzugt um 3 zu 1. Eine längsovale Ausgestaltung der Aussparungen ergibt automatische eine Verdickung der Streben an den Knoten, was für die Kraftübertragung ebenso günstig ist.

Die Realisierung von Knoten der Tragwerks- und/oder Netzstruktur führt zur Verbesserung der Eigensteifigkeit der Stützkeramik. Bei Realisierung der Stützstruktur durch einzelne Fasern wird die Funktion des Knoten gleichsam durch die enge Nachbarschaft voneinander kreuzenden Phasen an deren Übergänge übernommen, wobei die Kraftübertragung an den Knoten dann über die Füllkeramik oder Verblendung erfolgt.

Auch in diesem Fall ist die innige Verbindung zwischen Füllkeramik und Stützkeramik von Vorteil, die durch eine entsprechend mikrostrukturierte Oberfläche der Stützkeramik gewährleistet ist.

Weitere Vorteile, Einzelheiten und Merkmale ergeben sich aus der nachfolgenden Beschreibung mehrerer Ausführungsbeispiele der Erfindung anhand der Zeichnungen:

Es zeigen:
- Fig. 1: eine schematische Ansicht einer erfindungsgemäßen Dentalrestauration, unter Darstellung der Stützkeramik einer Brücke, in der Unteransicht;
- Fig. 2: eine schematische perspektivische Seitenansicht der Stützkeramik der Brücke gemäß Fig. 1;
- Fig. 3a: eine schematische Seitenansicht einer modifizierten Ausführungsform der erfindungsgemäßen Dentalrestauration;
- Fig. 3b: ein Schnitt entlang der Linie A-A aus Fig. 3a;
- Fig. 4: eine schematische Ansicht einer weiteren Ausführungsform einer erfindungsgemäßen Dentalrestauration; und
- Fig. 5: eine schematische Ansicht einer weiteren Ausführungsform einer erfindungsgemäßen Dentalrestauration.

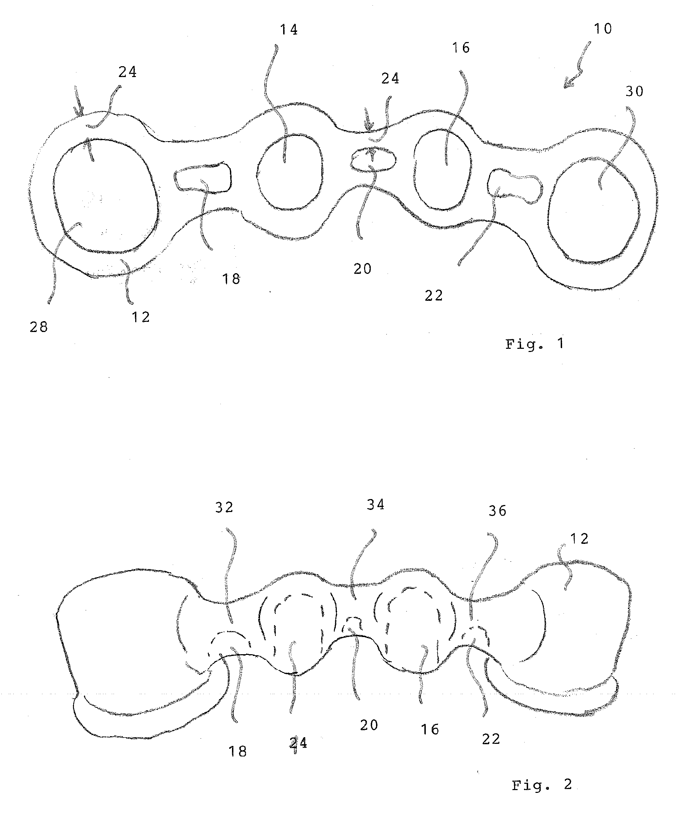

Die in Fig. 1 dargestellte Dentalrestauration 10 ist als Brücke ausgebildet und weist die aus Fig. 1 ersichtliche Stützkeramik 12 auf. Diese Stützkeramik 12 ist in Netz- oder Tragwerkstruktur im weitesten Sinne ausgebildet, wobei die vereinfachte Sicht der zeichnerischen Darstellung geschuldet ist und tatsächlich in der Praxis wesentlich komplexer und feingliedriger sein kann. Bevorzugt ist die Stützkeramik 12 eine Oxidkeramik, kann aber auch eine Glaskeramik mit einer gegenüber der Verblendung höherer Festigkeit sein.

Die Stützstruktur 12 weist in dem dargestellten Ausführungsbeispiel jedenfalls zwei runde Aussparungen 14 und 16 auf, die den Brückenzähnen zugeordnet sind und zervikal offen sind. Die Aussparungen 14 und 16 verlaufen konisch - wie es aus Fig. 2 ersichtlich ist - und sind an der inzisal/okklusalen Endfläche ausgerundet.

Zwischen diesen und neben diesen erstrecken sich weitere Aussparungen 18, 20 und 22, die den dort vorgesehenen Brückengliedern zugehörig sind und ebenfalls nach zervikal offen sind.

Die Stützkeramik 12 gemäß Fig. 1 ist so konstruiert, dass sie eine gleichbliebende Wandstärke von 1,5 mm aufweist. Es hat sich gezeigt, dass die dünne Wandstärke entscheidend ist, um das Entbindern zu beschleunigen, so dass bei der dargestellten Konstruktion eine Entbinderung innerhalb von 8 Stunden möglich ist.

Es versteht sich, dass die Wandstärke 24 bei der Ausführungsform gemäß Fig. 1 noch deutlich reduziert werden kann, beispielsweise auf 0,6 mm bis 0,8 mm, was zu einer entsprechend reduzierten Entbinderungszeit führt.

Verblendausnehmungen 28 und 30 sind den Pfeilerzähnen der Dentalrestauration zugeordnet und dienen in an sich bekannter Weise der Anbringung an dem dort befindlichen Zahnstumpf.

Die Stützkeramik ist völlig in eine Verblendung oder Verblendkeramik eingebettet. Diese gibt die Außenform insbesondere an der Okklusalfläche der Dentalrestauration vor und füllt auch die Aussparungen 14 bis 22 aus, während die Verblendausnehmungen 28 und 30 bevorzugt mit der Verblendkeramik lediglich ausgekleidet sind, um eine etwas weniger harte Lagerung der Dentalrestauration an dem jeweils zugehörigen Zahnstumpf zu gewährleisten.

Eine anatomisch günstige Lagerung ist von Bedeutung, um den Verschleiß der Antagonisten möglichst gering zu halten und das Kauempfinden der Dentalrestauration an das natürliche Kauempfinden anzunähren.

Aus Fig. 2 ist ersichtlich, dass sich Aussparungen 14 bis 22 sämtlich leicht konisch aufgeweitet nach unten, also in zervikaler Richtung erstrecken. Dies erleichtert und verbessert auch das Einpressen der Füllkeramik in diese.

Die Brückenglieder 32, 34 und 36 weisen in an sich bekannter Weise eine relativ schmale Quererstreckung in vestigulär-palatinal/lingualer Richtung auf. Diese beträgt im dargestellten Ausführungsbeispiel weniger als die Erstreckung in mesial-distaler Richtung, aber auch weniger als die Erstreckung in okklusal-zervikaler Richtung. Die Außenbreite der Brückenglieder 32, 36 (widerum in vestibulärer Richtung betrachtet) ist jedoch nicht wesentlich geringer oder sogar größer als die Ausdehnung in die beiden anderen Dimensionen; aufgrund der voluminös dimensionierten Aussparungen 18, 20 und 22 ist die tatsächliche Materialstärke jedoch wesentlich geringer.

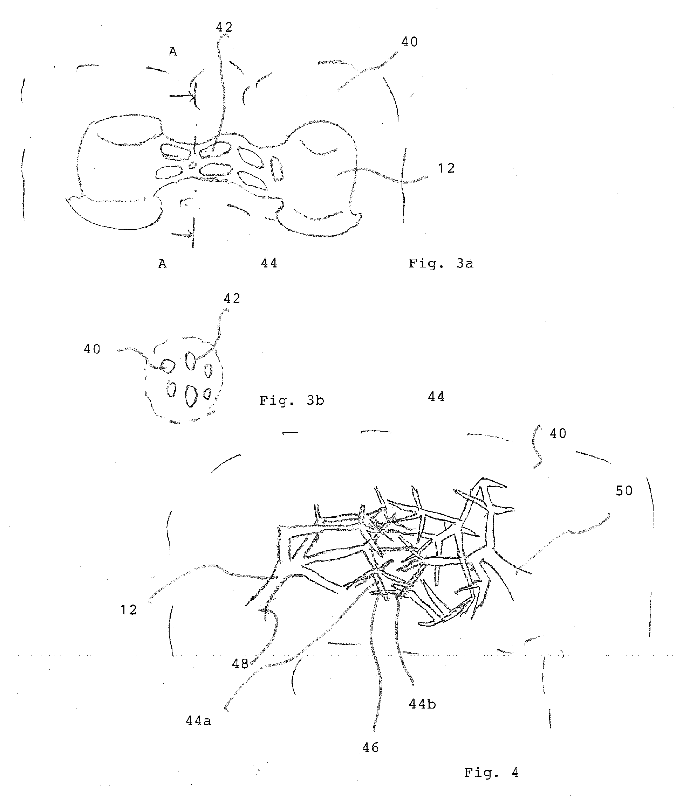

Aus Fig. 3a und Fig. 3b ist eine weitere Ausführungsform der erfindungsgemäßen Dentalrestauration ersichtlich. Hier ist die Verblendung oder Hüllkeramik 40 schematisch dargestellt. Sie durchdringt auch die Vielzahl von Aussparungen 42, die in der dortigen Stützkeramik 12 vorgesehen sind. Die Stützkeramik 12 weist hier eine Wabenstruktur auf, und die Aussparungen sind in vertikaler Richtung (also zervikal-okklusal betrachtet) längsoval, wie es aus Fig. 3 ersichtlich ist.

Bevorzugt erstrecken sich die Aussparungen 42 auch dreidimensional nach der Art eines offenporigen Schwammes, wobei dies aus Fig. 3a und Fig. 3b nicht ersichtlich ist. In diesem Ausführungsbeispiel sind jedenfalls Streben 44 vorgesehen, die ebenfalls einen kreisförmigen oder längsovalen Querschnitt aufweisen können. Wenn ein längsovaler Querschnitt gewählt ist, erstreckt sich die Hauptachse des längsovalen Querschnitts bevorzugt ebenfalls in vertikaler Richtung.

Aus Fig. 4 ist eine modifizierte Ausgestaltung einer erfindungsgemäßen Stützkeramik und der zugehörigen Verblendung ersichtlich. Die Netz- oder Tragwerkstruktur ist hier baumartig ausgestaltet oder mindestens einer Baumstruktur angenähert. Sich kreuzende feine Verästelungen der einzelnen Streben sind über die Verblendung 40 mit benachbarten Punkten verbunden, so dass sich virtuelle Knoten 46 ergeben, die in einer Vielzahl vorliegen und der Abstützung aneinander dienen.

Hierzu erstrecken sich die Streben 44a und 44b der Stützkeramik 12 im Raum schräg zueinander, aber so gegeneinander, dass sie an einer Stelle einander nahe kommen. Bevorzugt berühren sich die Streben 44a und 44b nicht, sondern es verbleibt ein Abstand zwischen 10 µm und 100 µm, der mit Füllkeramik gefüllt ist. Durch diesen Annäherungsbereich ist der virtuelle Knoten 46 gebildet.

Es versteht sich, dass die Stämme 48 und 50 der Baumstruktur in an sich bekannter Weise und in üblicher Weise mit Aufnahmen für die Pfeilerzähne verbunden sind, die in Fig. 4 nicht dargestellt sind.

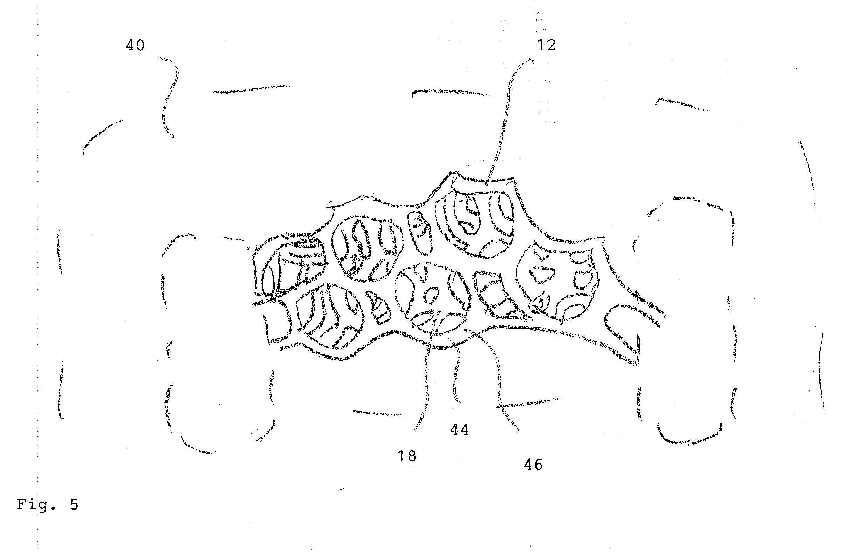

Aus Fig. 5 ist eine weitere dreidimensional gestaltete Netz- oder Tragwerkstruktur der Stützkeramik 12 ersichtlich. Diese Stützkeramik besteht aus einem dreidimensionalen Tragwerk mit Unstrukturen, die ineinander greifen, beispielsweise nach der Art von Hexaedern oder Oktaedern oder auch Würfeln.

Es ist auch möglich, die Aussparungen 18 nach der Art dichter Kugelpackungen auszugestalten und unter Computerhilfe so zu gestalten, dass die Wandstärke der Streben 44 je gleichbleibend etwa 100 µm beträgt. Im Bereich der Knoten 46 erfolgt eine Verdickung auf 200 µm, und am Übergang zwischen Strebe 44 und Knoten 46 ist die Stützstruktur konisch ausgestaltet.

Es versteht sich, dass die möglichen Kaukräfte bei der Realisierung der Stützstruktur beispielsweise per FEM einfließen können und die Stützstruktur in geeigneter Weise belastungsabhängig ausgelegt werden kann.

## Patentansprüche

1. Ein- oder mehrgliedrige Dentalrestauration, die aus einer Stützstruktur und einer Verblendung besteht, welche Stützstruktur insbesondere aus einer Oxidkeramik generativ, besonders bevorzugt per Rapid Prototyping, hergestellt ist, wobei die Verblendung durch Pressen aus einer gegenüber der Stützstruktur transluzenteren Keramik, wie einer Glaskeramik oder einem Komposit, hergestellt ist, **dadurch gekennzeichnet, dass** die Verblendung Ausnehmungen der als Netz- oder Tragwerkstruktur oder als Armierung ausgebildeten Stützstruktur (12) ausfüllt und / oder durchdringt, wobei es insbesondere vorgesehen ist, dass die Ausnehmungen die Stützstruktur (12) durchdringen.

2. Dentalrestauration nach Anspruch 1, **dadurch gekennzeichnet, dass** die Festigkeit der fertiggestellten Dentalrestauration höher als die aufsummierte Festigkeit von Stützstruktur und Verblendung je für sich ist.

3. Dentalrestauration nach Anspruch 1, **dadurch gekennzeichnet, dass** die Stützkeramik Stützstruktur (12) Verstärkungsrippen ausbildet, die sich mindestens teilweise zwischen Pfeilerzähnen erstrecken und für die Aufnahme insbesondere auch vertikaler Lasten ausgebildet sind.

4. Dentalrestauration nach einem der vorhergehenden Ansprüche, **dadurch gekennzeichnet, dass** die Stützstruktur (12) Verstärkungsstreben aufweist, die sich ggf. quer zur Längserstreckung der Dentalkeramik erstrecken und insbesondere zum zervikalen Bereich der Pfeilerzähne oder zum Stumpf dieser hin verlaufen.

5. Dentalrestauration nach einem der vorhergehenden Ansprüche, **dadurch gekennzeichnet, dass** sie als Krone, ggf. mit einem Geschiebe, ausgebildet ist und interdentale Verbinder aufweist, die sich mindestens teilweise schräg zur Längserstreckung der Dentalrestauration (10) erstrecken, insbesondere zum zervikalen Bereich der Pfeilerzähne hin geneigt sind.

6. Dentalrestauration nach einem der vorhergehenden Ansprüche, **dadurch gekennzeichnet, dass** die CAD-Software, über welche die Form hergestellt wird, auch die Trennflächen zwischen der Oxidkeramik und der Verblendung legt oder vorschlägt, und dass insbesondere die Trennflächen mindestens doppelt, bevorzugt mindestens dreimal und besonders bevorzugt mindestens fünfmal so groß wie die Querschnittsfläche des zu restaurierenden Zahns an der Okklusal/Inzisal-Ebene sind.

7. Dentalrestauration nach einem der vorhergehenden Ansprüche, **dadurch gekennzeichnet, dass** die Stützstruktur (12) zumindest teilweise einen Hohlraum umgebend ausgebildet ist und eine Wandstärke (24) von weniger als 4 mm, insbesondere weniger als 1 mm aufweist.

8. Dentalrestauration nach einem der vorhergehenden Ansprüche, **dadurch gekennzeichnet, dass** die Verblendung aus einem Positivmodell erzeugt ist, das in eine Muffel eingebettet und ausgebrannt wird, wobei der entstandene Hohlraum unter Bildung der Dentalrestauration ausgefüllt wird.

9. Dentalrestauration nach einem der vorhergehenden Ansprüche, **dadurch gekennzeichnet, dass** die Stützstruktur (12) Fixierungsstege aufweist, die in der Einbettmasse eingebettet ist und die Position der Stützstruktur (12) in dem entstehenden Hohlraum der Muffel vorgeben.

10. Dentalrestauration nach einem der vorhergehenden Ansprüche, **dadurch gekennzeichnet, dass** die Stützstruktur (12) Fixierungsstege und die Verblendung hierzu passende Kerben aufweist, die je formschlüssig ineinander greifen und an einer nicht-la-bialen Seite der Dentalrestauration (10) ausgebildet sind.

11. Dentalrestauration nach einem der vorhergehenden Ansprüche, **dadurch gekennzeichnet, dass** die Netz- oder Tragwerkstruktur aus Streben (44) gebildet ist, die sich zwischen Knoten (46) erstrecken, wobei mindestens ein Knoten (46) mit mindestens drei Streben (44) in Verbindung steht, und dass die Streben eine Länge von mindestens dem Dreifachen, insbesondere mindestens dem Fünffachen ihres Durchmessers an der Stelle des geringsten Durchmessers aufweisen.

12. Dentalrestauration nach Anspruch 11, **dadurch gekennzeichnet, dass** die Streben (44) zu dem Knoten (46) hin einen gegenüber der Mitte der Streben (44) vergrößerten Durchmesser aufweisen.

13. Dentalrestauration nach einem der vorhergehenden Ansprüche, **dadurch gekennzeichnet, dass** die Armierung mindestens ein vorgefertigtes Armierungselement in einer Standardgeometrie aufweist.

14. Dentalrestauration, die aus einer eine Stützstruktur bildenden Stützkeramik und einer Verblendung besteht, deren Stützkeramik insbesondere durch ein generatives Verfahren, vorzugsweise per Stereolithographie, aus einem oxid- oder glaskeramisch gefüllten härtbaren Masse, insbesondere photopolymerisierbarem Schlicker, aufgebaut ist, welcher in einen thermischen Prozess entbindert und dichtgesintert ist, und deren Verblendung durch Pressen aus einer gegenüber der Keramik der Stützstruktur transluzenteren Keramik, wie einer Glaskeramik oder einem Komposit, hergestellt ist, **dadurch gekennzeichnet, dass** die Stützkeramik (12) als Netz- oder Tragwerkstruktur unter Bildung von mit der Glaskeramik oder dem Komposit, je als Verblendung, gefüllten Ausnehmungen ausgebildet ist.

15. Dentalrestauration nach Anspruch 14, **dadurch gekennzeichnet, dass** die Stützstruktur durch Pressen eines Rohlings aus einer Glaskeramik in einen Hohlraum in einer Muffel hergestellt ist, welcher Hohlraum durch Umgießen einer per CAD-Design in einem generativen Verfahren erzeugten Positiv-Form mittels einer Einbettmasse bereitgestellt ist und hierdurch aufgebaut ist, welche Glaskeramik gegenüber der Verblendung eine höhere Festigkeit aufweist, und wobei die Verblendung durch Pressen aus einer Glaskeramik oder einem Komposit hergestellt ist.

16. Dentalrestauration nach einen der Ansprüche 14 oder 15, **dadurch gekennzeichnet, dass** der Hohlraum für die Verblendung in einem Pressverfahren mit einer Glaskeramik ausgefüllt wird, wobei das Material für die Stützstruktur (12) eine höhere Festigkeit als das Material für die Verblendung aufweist, und wobei die Verblendung durch Pressen aus einer gegenüber der Glaskeramik der Stützstruktur (12) transluzenteren Glaskeramik, oder einem Komposit, hergestellt ist.

17. Dentalrestauration nach einem der vorhergehenden Ansprüche, wobei die Stützstruktur eine metallische Stützstruktur ist, die über einen generativen Prozess, vorzugsweise indirekt über Stereolithographie eines Modells aus ausbrennbarem Material und anschliessendem Einbetten und Giessen der metallischen Stützstruktur, oder über Selective Laser Sintering hergestellt wird, und wobei anschliessend die metallische Stützstruktur opakisiert und gemäss den vorhergehenden Ansprüchen mittels eines Pressprozesses mit einer glaskeramischen Verblendkeramik über- bzw. hinsichtlich Ihrer Ausnehmungen durchpresst ist.

18. Verfahren zur Herstellung einer ein- oder mehrgliedrigen Dentalrestauration, bei welcher eine Verblendung per CAD-Design dergestalt hergestellt wird, wobei zunächst die CAD-Software eine Stützstruktur konstruiert, welche insbesondere per Rapid-Prototyping aus oxid- oder glaskeramischen Werkstoffen generativ hergestelltt wird, und dass die Verblendung in einen an sich bekannten Verfahren mittels Muffelpressen erzeugt wird, aus einer Glaskeramik, die gegenüber der Oxidkeramik transluzenter ist, **dadurch gekennzeichnet, dass** die CAD-Software die Trennflächen zwischen der Stützkeramik (12) und der Verblendung dergestalt festlegt, dass die Stützkeramik (12) in Netz-, Waben- oder Tragwerkstruktur unter Bildung von Ausnehmungen ausgebildet wird, die von der Verblend-Glaskeramik gefüllt werden.

## Geänderte Patentansprüche

### Geänderte Patentansprüche gemäss Regel 137(2) EPÜ.

1. Ein- oder mehrgliedrige Dentalrestauration, die aus einer Stützstruktur (12) und einer Verblendung (40) besteht, welche Stützstruktur (12) insbesondere aus einer Oxidkeramik generativ, besonders bevorzugt per Rapid Prototyping, hergestellt ist, wobei die Verblendung durch Pressen aus einer gegenüber der Stützstruktur (12) transluzenteren Keramik, wie einer Glaskeramik oder einem Komposit, hergestellt ist, **dadurch gekennzeichnet, dass** die Verblendung (40) Aussparungen (14 bis 22; 42; 18) der als Netz- oder Tragwerkstruktur oder als Armierung ausgebildeten Stützstruktur (12) ausfüllt und/oder durchdringt, wobei die Aussparungen (14 bis 22; 42; 18) die Stützstruktur (12) durchdringen, und wobei die Stützstruktur (12) Verblendausnehmungen (28, 30), die den Pfeilerzähnen zugeordnet sind, aufweist.

2. Dentalrestauration nach Anspruch 1, **dadurch gekennzeichnet, dass** [die] das Festigkeits- zu Volumenverhältnis der fertiggestellten Dentalrestauration höher als die aufsummierte Festigkeit von Stützstruktur und Verblendung je für sich ist.

3. Dentalrestauration nach Anspruch 1, **dadurch gekennzeichnet, dass** die Stützkeramik Stützstruktur (12) Verstärkungsrippen ausbildet, die sich mindestens teilweise zwischen Pfeilerzähnen erstrecken und für die Aufnahme insbesondere auch vertikaler Lasten ausgebildet sind.

4. Dentalrestauration nach einem der vorhergehenden Ansprüche, **dadurch gekennzeichnet, dass** die Stützstruktur (12) Verstärkungsstreben aufweist, wobei die Verstärkungsstreben sich quer zur Längserstreckung der Dentalkeramik erstrecken und zum zervikalen Bereich der Pfeilerzähne oder zum Stumpf dieser hin verlaufen.

5. Dentalrestauration nach einem der vorhergehenden Ansprüche, **dadurch gekennzeichnet, dass** sie als Krone, ggf. mit einem Geschiebe, ausgebildet ist und interdentale Verbinder aufweist, die sich mindestens teilweise schräg zur Längserstreckung der Dentalrestauration (10) erstrecken, insbesondere zum zervikalen Bereich der Pfeilerzähne hin geneigt sind.

6. Dentalrestauration nach einem der vorhergehenden Ansprüche, **dadurch gekennzeichnet, dass** über eine CAD-Software die Form herstellbar ist, wobei über die CAD-Software die Trennflächen zwischen der Oxidkeramik und der Verblendung vorgelegt oder vorgeschlagen worden, und dass insbesondere die Trennflächen mindestens doppelt, bevorzugt mindestens dreimal und besonders bevorzugt mindestens fünfmal so groß wie die Gluerschnittsfläche des zu restaurierenden Zahns an der Okklusal/Inzisal-Ebene sind, wobei die genaue Anordnung der Tragweks- oder Netzstruktur nach der Finite-Elemente-Methode berechnet und festgelet werden kann.

7. Dentalrestauration nach einem der vorhergehenden Ansprüche, **dadurch gekennzeichnet, dass** die Stützstruktur (12) zumindest teilweise einen Hohlraum umgebend ausgebildet ist und eine Wandstärke (24) von weniger als 4 mm, insbesondere weniger als 1 mm aufweist.

8. Dentalrestauration nach einem der vorhergehenden Ansprüche, **dadurch gekennzeichnet, dass** die Verblendung aus einem Positivmodell, welches, in eine Muffel eingebettet und ausgebrannt werden kann erzeugbar ist, so dass der dadurch entstandene Hohlraum unter Bildung der Dentalrestauration ausgefüllt wird.

9. Dentalrestauration nach Anspruch 8, **dadurch gekennzeichnet, dass** die Stützstruktur (12) Fixierungsstegeaufweist, die in einer Einbettmasse eingebettet sind und die Position der Stützstruktur (12) in dem entstehenden Hohlraum der Muffel vorgeben.

10. Dentalrestauration nach einem der vorhergehenden Ansprüche, **dadurch gekennzeichnet, dass** die Stützstruktur (12) Fixierungsstege und die Verblendung hierzu passende Kerben aufweist, die je formschlüssig ineinander greifen und an einer nicht-la-bialen Seite der Dentalrestauration (10) ausgebildet sind.

11. Dentalrestauration nach einem der vorhergehenden Ansprüche, **dadurch gekennzeichnet, dass** die Netz- oder Tragwerkstruktur aus Streben (44) gebildet ist, die sich zwischen Knoten (46) erstrecken, wobei mindestens ein Knoten (46) mit mindestens drei Streben (44) in Verbindung steht.

12. Dentalrestauration nach Anspruch 11, **dadurch gekennzeichnet, dass** die Streben (44) zu dem Knoten (46) hin einen gegenüber der Mitte der Streben (44) vergrößerten Durchmesser aufweisen.

13. Dentalrestauration nach einem der vorhergehenden Ansprüche, **dadurch gekennzeichnet, dass** die Armierung mindestens ein vorgefertigtes Armierungselement aufweist.

14. Dentalrestauration, die aus einer eine Stützstruktur bildenden Stützkeramik und einer Verblendung besteht, deren Stützkeramik insbesondere durch ein generatives Verfahren, vorzugsweise per Stereolithographie, aus einem oxid- oder glaskeramisch gefüllten härtbaren Masse, insbesondere photopolymerisierbarem Schlicker, aufgebaut ist, welcher in einen thermischen Prozess entbindert und dichtgesintert ist, und deren Verblendung durch Pressen aus einer gegenüber der Keramik der Stützstruktur transluzenteren Keramik, wie einer Glaskeramik oder einem Komposit, hergestellt ist, **dadurch gekennzeichnet, dass** die Stützkeramik (12) unter Bildung von mit der Glaskeramik oder dem Komposit, je als Verblendung, gefüllten Aussparungen (14 bis 22; 42; 18) als Netz- oder Tragwerkstruktur ausgebildet ist, wobei die Aussparungen (14 bis 22; 42; 18) die Stützstruktur (12) durchdringen, und wobei die Stützstruktur (12) Verblendausnehmungen (28, 30), die den Pfeilerzähnen zugeordnet sind, aufweist.

15. Dentalrestauration nach Anspruch 14, **dadurch gekennzeichnet, dass** die Stützstruktur durch Pressen eines Rohlings aus einer Glaskeramik in einen Hohlraum in einer Muffel hergestellt ist, welcher Hohlraum durch Umgießen einer per CAD-Design in einem generativen Verfahren erzeugten Positiv-Form mittels einer Einbettmasse bereitgestellt ist und hierdurch aufgebaut ist, welche Glaskeramik gegenüber der Verblendung eine höhere Festigkeit aufweist, und wobei die Verblendung durch Pressen aus einer Glaskeramik oder einem Komposit hergestellt ist.

16. Dentalrestauration nach einen der Ansprüche 14 oder 15, **dadurch gekennzeichnet, dass** der Hohlraum für die Verblendung in einem Prossverfahren mit einer Glaskeramik ausgefüllt wird, wobei das Material für die Stützstruktur (12) eine höhere Festlgkeit als das Material für die Verblendung aufweist, und wobei die Verblendung durch Pressen aus einer gegenüber der Glaskeramik der Stützstruktur (12) transluzenteren Glaskeramik, oder einem Komposit, hergestellt ist.

17. Dentalrestauration nach einem der vorhergehenden Ansprüche, wobei die Stützstruktur eine metallische Stützstruktur ist, die über einen generativen Prozess, vorzugsweise indirekt über Stereolithographie eines Modells aus ausbrennbarem Material und anschliessendem Einbetten und Giessen der metallischen Stützstruktur, oder über Selective Laser Sintering hergestellt wird, und wobei anschliessend die metallische Stützstruktur opakisiert und gemäss den vorhergehenden Ansprüchen mittels eines Pressprozesses mit einer glaskeramischen Verblendkeramik über- bzw. hinsichtlich Ihrer Aussparungen durchpresst ist.

18. Verfahren zur Herstellung einer ein- oder mehrgliedrigen Dentalrestauration, bei welcher eine Verblendung per CAD-Design dergestalt hergestellt wird, wobei zunächst die CAD-Software eine Stützstruktur konstruiert, welche insbesondere per Rapid-Prototyping aus oxidkeramischen Werkstoffen generativ hergestelltt wird, und dass die Verblendung in einen an sich bekannten Verfahren mittels Muffelpressen erzeugt wird, aus einer Glaskeramik, die gegenüber der Oxidkeramik transluzenter ist, **dadurch gekennzeichnet, dass** die CAD-Software die Trennflächen zwischen der Stützkeramik (12) und der Verblendung dergestalt festlegt, dass die Stützkeramik (12) in Netz-, Waben- oder Tragwerkstruktur unter Bildung von durchgehenden Aussparungen, die von der Verblend-Glaskeramik gefüllt werden, ausgebildet wird.
